# FASCICULE DE BREVET EUROPEEN

(11) **EP 2 855 178 B1**
(45) Date de publication et mention de la délivrance du brevet: **20.04.2016**
(21) Numéro de dépôt: 13723872.1
(22) Date de dépôt: 25.04.2013
(51) Int. Cl.: B60G 21/055, B60G 11/60, F16F 1/50, F16F 1/38, F16F 1/54

(54) **ENSEMBLE DE PALIER D'ARTICULATION POUR UNE BARRE ANTI-DEVERS**
SCHWENKBARE LAGERANORDNUNG FÜR EINEN STABILISATOR
HINGING BEARING ASSEMBLY FOR AN ANTI-ROLL BAR

(30) Priorité: 29.05.2012 FR 1254912
(43) Date de publication de la demande: 08.04.2015
(73) Titulaire: Renault S.A.S., 92100 Boulogne-Billancourt (FR)
(72) Inventeur: BOURLON, Franck, F-28700 Aunay-sous-Auneau (FR)
(86) Numéro de dépôt international: PCT/FR2013/050922
(87) Numéro de publication internationale: WO 2013/178896

(56) Documents cités:
- EP-A1- 0 847 884
- EP-A1- 1 878 599
- WO-A1-2006/008803
- DE-A1-102004 056 884
- FR-A1- 2 615 458
- FR-A1- 2 806 035
- JP-A- 8 244 431
- JP-A- 10 217 741
- US-A- 5 290 018
- US-A1- 2004 070 161

## Description

L'invention concerne un ensemble de palier d'articulation d'une barre anti-dévers d'une suspension de véhicule automobile.

L'invention concerne plus particulièrement un ensemble de palier d'articulation d'une barre anti-dévers d'une suspension de véhicule automobile sur un élément de structure de caisse dudit véhicule automobile comprenant au moins un élément élastomère sensiblement cylindrique tubulaire comportant un alésage interne qui est traversé par la barre anti-dévers et qui est reçu dans un logement en forme de U solidaire de l'élément de structure de caisse, une portée extérieure dudit élément élastomère comportant une première moitié qui est reçue dans une portée de fond concave du logement en forme de U et une seconde moitié qui reçoit une bride d'immobilisation dans ledit logement.

On connaît de nombreux exemples d'ensemble de palier d'articulation de ce type. Les documents DE 102004056884 A, WO 2006/008803A, JP08244431A, US 5290018A et US 2004/0070161A divulguent des ensembles de palier d'articulation qui sont pertinents dans ce contexte.

Conventionnellement, l'élément élastomère est simplement enfilé sur la barre anti-dévers, puis serré dans le logement de l'élément de structure de caisse à l'aide la bride.

L'inconvénient de cette conception est que la barre anti-dévers n'est alors pas immobilisée par rapport à l'élément de structure de caisse puisqu'elle est libre de pivoter dans l'élément élastomère.

A l'opposé, il est également connu, pour des problèmes d'usure de caoutchouc et de bruyance, de rendre le caoutchouc solidaire de la barre anti-dévers et de la caisse, sans demi-mesure possible.

Cette impossibilité de mouvement peut s'avérer gênante lors de l'assemblage du véhicule, la barre occupant alors des positions qui gênent l'assemblage d'autres organes du véhicule.

Par exemple, lorsque la barre anti-dévers présente comme c'est couramment le cas la forme d'un U, constitué d'une partie centrale transversale, articulée par l'intermédiaire d'éléments élastomères, et de deux bras sensiblement longitudinaux qui sont fixés à des triangles de suspension, on comprendra qu'une possibilité de rotation de la partie centrale dans les éléments élastomères peut s'avérer intéressante pour faciliter, voire permettre, la fixation des bras sur les triangles, ou pour la manipulation d'autres organes si les bras demeurent pendants.

L'invention remédie à ces inconvénients en proposant un ensemble de palier d'articulation permettant une rotation limitée de la barre anti-dévers préalablement à sa fixation, puis interdisant sa libre rotation après sa fixation, afin d'éviter toute interférence de la barre anti-dévers avec d'autres organes lors de l'assemblage d'un véhicule automobile.

Dans ce but, l'invention propose un ensemble de palier d'articulation du type décrit précédemment, caractérisé en ce que l'élément élastomère est collé sur la barre anti-dévers et en ce que l'ensemble comporte des moyens de montage autorisant une rotation limitée de la barre, qui comportent au moins :
- un élément d'aide au maintien en rotation, constitué d'un élément semi-cylindrique, qui comporte une portée intérieure qui est collée sur la seconde moitié de la portée extérieure de l'élément élastomère et qui comporte un moyen en saillie, porté par une portée extérieure dudit élément semi-cylindrique, qui autorise un débattement angulaire déterminé limité de l'élément élastomère entre des parois parallèles du logement en "U" pendant la mise en place de la barre anti-dévers et de l'élément élastomère dans le logement,
- une cale de compression, qui est apte à être indexée suivant une position angulaire déterminée sur l'élément d'aide au maintien en rotation et à être reçue simultanément sans jeu entre les parois parallèles du logement en "U",
- une bride d'immobilisation, apte à coiffer la cale de compression et à la serrer dans le logement en U contre l'élément élastomère pour immobiliser l'élément élastomère en rotation après la mise en place de la barre anti-dévers et de l'élément élastomère dans le logement.

Selon d'autres caractéristiques de l'invention :
- la cale de compression comporte au moins un logement complémentaire du moyen en saillie, qui est apte à recevoir ledit moyen en saillie pour permettre l'indexation angulaire de ladite cale de compression sur l'élément d'aide au maintien en rotation,
- le moyen en saillie comporte un doigt qui fait saillie radialement à partir de la portée extérieure de l'élément d'aide au maintien en rotation, et qui traverse un perçage de la cale de compression formant le logement complémentaire puis un perçage de la bride,
- le moyen en saillie comporte une clavette qui fait saillie radialement à partir de la portée extérieure de l'élément d'aide au maintien en rotation transversalement par rapport à son axe, et qui est reçue dans un logement complémentaire de la cale de compression,
- le logement en forme de U est formé dans un élément de fonderie solidaire de l'élément de structure de caisse et il comporte une portée de fond semi-cylindrique recevant la première moitié de la portée cylindrique extérieure de l'élément élastomère, la bride d'immobilisation étant constituée d'une plaque qui est fixée transversalement sur l'élément de fonderie de manière à fermer le logement en forme de U,
- le logement en forme de U est formé dans une face supérieure d'un élément usiné qui comporte une face inférieure d'appui sur l'élément de structure de caisse, et il comporte une portée de fond concave complémentaire de la première moitié de la portée extérieure de l'élément élastomère, la bride d'immobilisation étant constituée d'un cavalier en forme de fer à cheval qui comprend un logement concave et des bras parallèles recevant la cale de compression, lesdits bras comportant à leur extrémités des branches transversales aptes à être fixées sur l'élément de structure de caisse,
- les bras parallèles comportent des perçages qui sont traversés par des vis qui sont reçues dans l'élément de structure de caisse, pour permettre la fixation de la bride sur l'élément de structure de caisse,
- l'élément usiné présente un encombrement transversal correspondant à l'écartement des bras de la bride, pour permettre la fixation de l'élément usiné sur l'élément de structure de caisse par l'intermédiaire de la bride,
- la première moitié de la portée cylindrique extérieure de l'élément élastomère comporte un méplat complémentaire d'un méplat formé dans la concavité de l'élément usiné,
- la seconde moitié de la portée cylindrique extérieure de l'élément élastomère comporte un méplat complémentaire d'un méplat formé dans élément d'aide au maintien en rotation et d'un méplat correspondant formé dans la cale compression.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective d'un ensemble de palier selon un premier mode de réalisation de l'invention ;
- la figure 2 est une vue d'ensemble en perspective d'un ensemble de palier selon un deuxième mode de réalisation de l'invention ;
- la figure 3 est une vue en bout d'une partie de l'ensemble de palier de la figure 1 ;
- la figure 4 est une vue en bout d'une partie de l'ensemble de palier de la figure 2 ;
- la figure 5 est une vue en coupe de l'ensemble de palier de la figure 1 ;
- la figure 6 est une vue en coupe d'un ensemble de palier selon un troisième mode de réalisation de l'invention.

Sur les figures, des chiffres de référence identiques désignent des éléments identiques ou ayant des fonctions similaires.

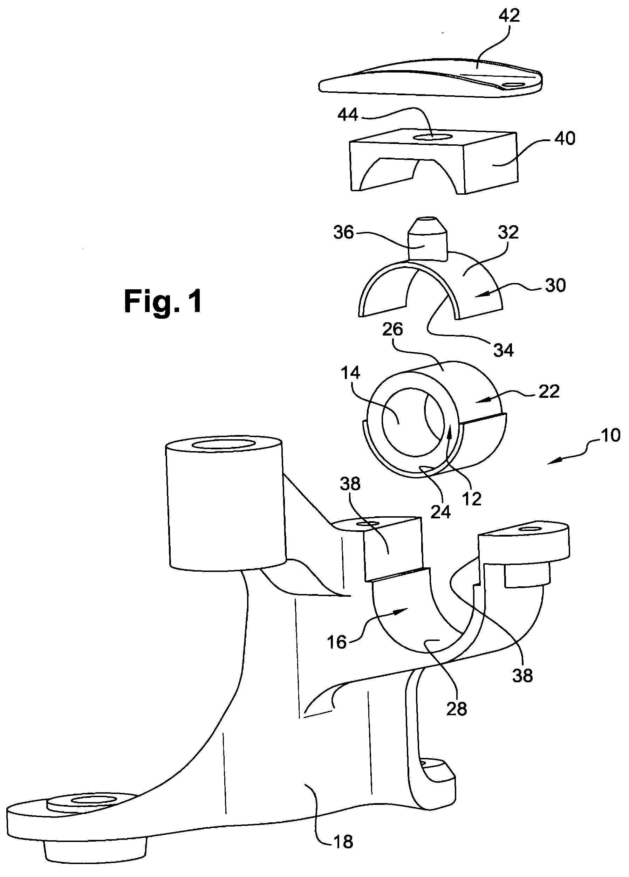

On a représenté sur les figures 1, 2, et 6 un ensemble 10 de palier d'articulation pour une barre anti-dévers (non représentée) d'une suspension de véhicule automobile sur un élément (non représenté) de structure de caisse dudit véhicule automobile.

De manière connue, l'ensemble 10 comprend au moins un élément 12 élastomère sensiblement cylindrique tubulaire comportant un alésage interne 14 qui est traversé par la barre anti-dévers (non représentée).

De manière connue, l'élément élastomère 12 est reçu dans un logement 16 en forme de U qui est solidaire de l'élément de structure de caisse.

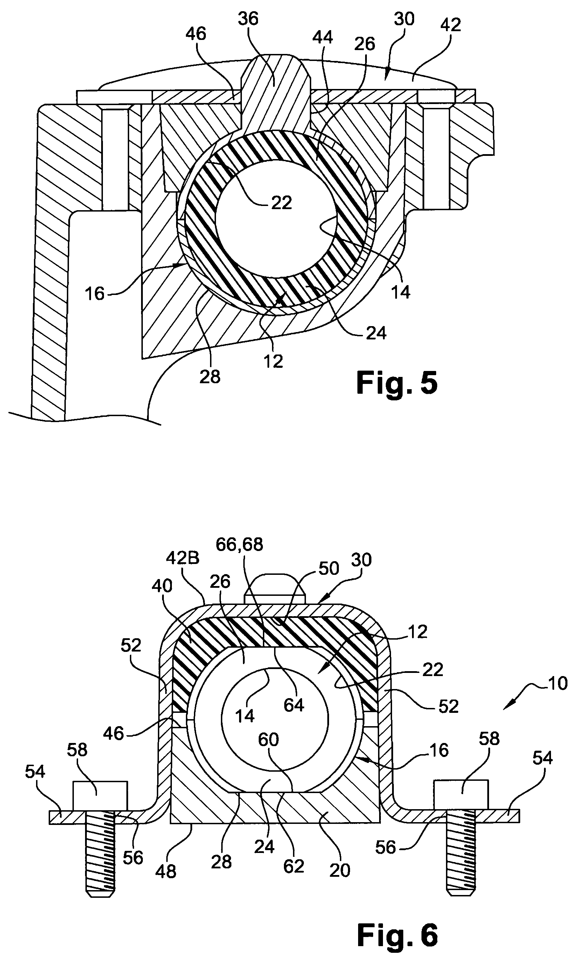

Comme on le verra ultérieurement dans la suite de la présente description, le logement 16 peut être réalisé dans un élément 18 de fonderie solidaire de l'élément de structure de caisse, comme représenté à la figure 1, ou dans un élément usiné 20 rapporté sur un élément de structure de caisse du véhicule, comme représenté à la figure 6.

De manière connue, une portée extérieure 22 de l'élément 12 élastomère comporte une première moitié 24 qui est reçue dans une portée de fond concave 28 du logement 16 en forme de U et une seconde moitié 26 qui reçoit une bride 42 d'immobilisation dans ledit logement 16.

Conventionnellement, l'élément élastomère 12 est simplement enfilé sur la barre anti-dévers, puis serré dans le logement 16 de l'élément de structure de caisse à l'aide la bride 42.

L'inconvénient de cette conception est que la barre anti-dévers n'est alors pas immobilisée par rapport à l'élément de structure de caisse puisqu'elle est libre de pivoter dans l'élément élastomère 12.

Cette possibilité de mouvement peut s'avérer gênante lors de l'assemblage du véhicule, la barre occupant alors des positions qui gênent l'assemblage d'autres organes du véhicule.

Pour remédier à cet inconvénient, l'invention propose un ensemble 10 de palier d'articulation permettant une rotation limitée de la barre anti-dévers préalablement à sa fixation, puis interdisant sa libre rotation après sa fixation, afin d'éviter toute interférence de la barre anti-dévers avec d'autres organes lors de l'assemblage d'un véhicule automobile.

Dans ce but, l'invention propose un ensemble 10 de palier d'articulation du type décrit précédemment, caractérisé en ce que l'élément élastomère 12 est collé sur la barre anti-dévers et en ce que l'ensemble 10 comporte des moyens de montage autorisant une rotation limitée dans les deux sens de la barre.

Comme l'illustrent les figures 1 à 4, ces moyens de montage comportent au moins un élément 30 d'aide au maintien en rotation, constitué d'une partie semi-cylindrique 32, qui comporte une portée intérieure 34 qui est collée sur la seconde moitié 26 de la portée extérieure 22 de l'élément élastomère 12.

L'élément 30 d'aide au maintien en rotation comporte une partie 36 en saillie, portée par une portée extérieure de la partie 32 semi-cylindrique, qui autorise un débattement angulaire déterminé limité de l'élément élastomère 12 entre des parois parallèles 38 du logement en "U" pendant la mise en place de la barre anti-dévers et de l'élément élastomère 12 dans le logement 16.

Les moyens de montage comportent aussi une cale 40 de compression, qui est apte à être indexée suivant une position angulaire déterminée sur l'élément 30 d'aide au maintien en rotation et à être reçue simultanément sans jeu entre les parois parallèles 38 du logement en "U".

Enfin, les moyens de montage comportent une bride 42 d'immobilisation qui est apte à coiffer la cale 40 de compression et à la serrer dans le logement 16 en U contre l'élément élastomère 12 pour immobiliser l'élément élastomère 12 en rotation après la mise en place de la barre anti-dévers et de l'élément élastomère 12 dans le logement 16.

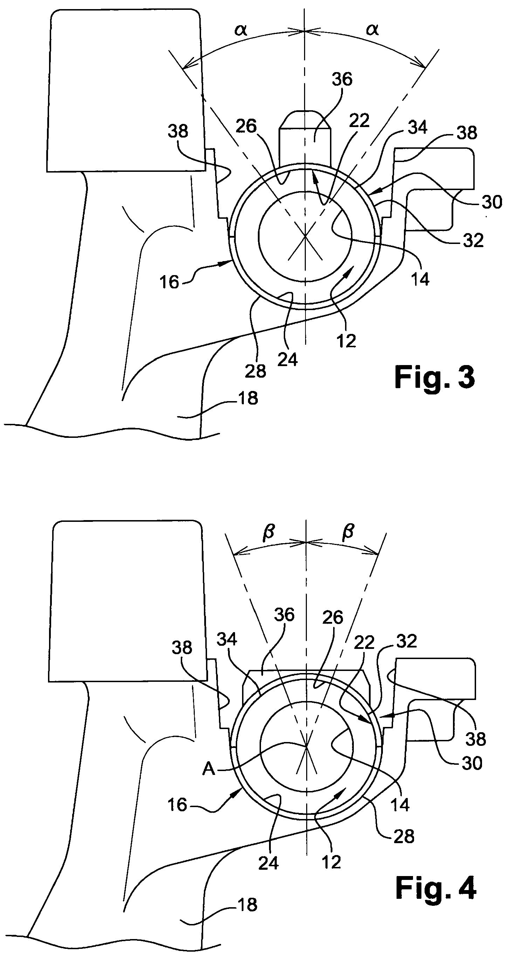

Ainsi, comme l'illustrent les figures 3 et 4, au cours du montage de l'ensemble 10 de palier, l'élément 30 d'aide au maintien autorise un débattement angulaire déterminé limité de l'élément élastomère 12 entre des parois parallèles 38 du logement en "U" pendant la mise en place de la barre anti-dévers et de l'élément élastomère 12 dans le logement 16 tant que la cale 40 de compression n'est pas montée.

Selon un premier mode de réalisation qui a été représenté aux figures 1, 3 et 5, la partie en saillie 36 comporte un doigt 36 qui fait saillie radialement à partir de la portée extérieure de l'élément 30 d'aide au maintien en rotation. Cette configuration permet sensiblement un débattement d'un angle "α" d'environ 35° de part et d'autre d'une position médiane du doigt entre les parois parallèles 38.

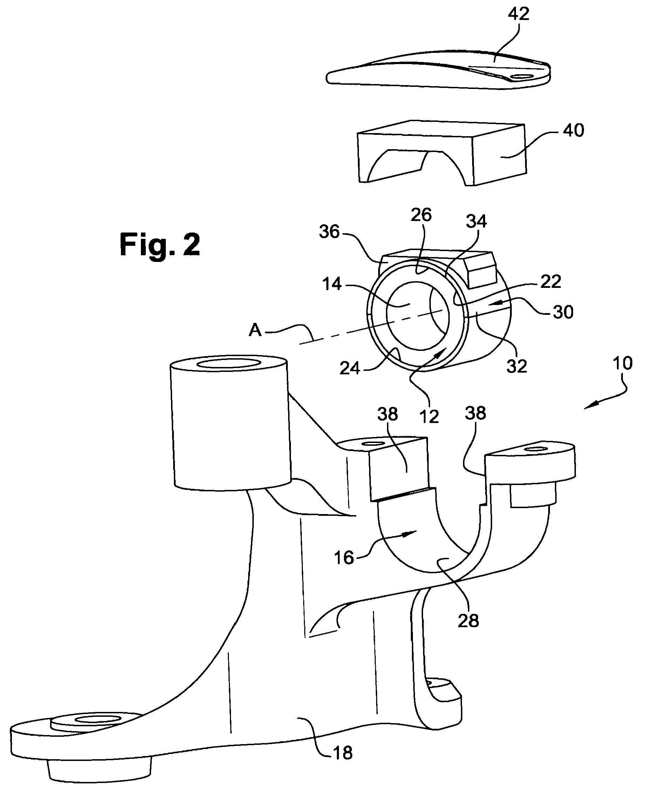

Selon un second mode de réalisation qui a été représenté aux figures 2 et 4, la partie en saillie 36 comporte une clavette 36 qui fait saillie radialement à partir de la portée extérieure de l'élément 30 d'aide au maintien en rotation transversalement par rapport à son axe "A". Cette configuration permet sensiblement un débattement d'un angle "β" plus réduit, d'environ 20° de part et d'autre d'une position médiane de repos de la clavette 36 entre les parois parallèles 38.

Comme l'illustre la figure 1, la cale de compression 40 comporte par ailleurs au moins un logement complémentaire 44 de la partie 36 en saillie de l'élément 30 d'aide au maintien. Ce logement est apte à recevoir ladite partie en saillie 36 pour permettre l'indexation angulaire de ladite cale 40 de compression sur l'élément 30 d'aide au maintien en rotation.

Ce logement a été représenté seulement en référence au premier mode de réalisation des figures 1 et 5, mais il sera entendu qu'il est prévu un tel logement pour tous les modes de réalisation de l'invention.

Ainsi, selon le premier mode de réalisation de l'invention, le doigt 36 traverse un perçage 44 de la cale de compression formant le logement complémentaire. On remarquera que le doigt 36 traverse aussi un perçage 46 de la bride 42.

D'une manière analogue, dans le second mode de réalisation de la figure 2, la clavette 36 est reçue dans un logement complémentaire (non représenté) de la cale de compression.

Dans les premier et deuxième modes de réalisation qui ont été représentés aux figures 1 à 4, le logement 16 en forme de U est formé dans un élément 18 de fonderie qui est solidaire de l'élément de structure de caisse.

Le logement 16 comporte une portée 28 de fond semi-cylindrique recevant la première moitié 24 de la portée cylindrique extérieure de l'élément élastomère 12, la bride d'immobilisation 42 étant constituée d'une plaque qui est fixée transversalement sur l'élément de fonderie 18 de manière à fermer le logement en forme de U.

Selon un troisième mode de réalisation qui a été représenté à la figure 6, le logement 16 en forme de U est formé dans une face supérieure 46 d'un élément usiné 20 qui comporte une face inférieure d'appui 48 sur l'élément de structure de caisse (non représenté).

Similairement aux modes de réalisation précédents, le logement 16 comporte une portée 28 de fond concave complémentaire de la première moitié 24 de la portée extérieure de l'élément élastomère 12.

Dans ce mode de réalisation, la bride d'immobilisation 42B est constituée d'un cavalier en forme de fer à cheval dont un logement concave 50 et des bras parallèles 52 reçoivent la cale 40 de compression. Des branches transversales 54 agencées à l'extrémité des bras 52 sont fixées sur l'élément de structure de caisse.

De préférence, pour permettre la fixation de la bride sur l'élément de structure de caisse, les branches transversales 54 comportent des perçages 56 qui sont traversés par des vis 58 qui sont reçues dans l'élément de structure de caisse.

Avantageusement, mais de manière non limitative de l'invention, la bride 42B permet aussi la fixation de l'élément usiné 20.

A cet effet, l'élément usiné 20 présente un encombrement transversal correspondant à l'écartement des bras 52 de la bride 42B, pour permettre la fixation de l'élément usiné 20 sur l'élément de structure de caisse par l'intermédiaire de la bride 42B.

Par ailleurs, pour faciliter le montage de l'élément élastomère 12 dans l'élément usiné 20, la première moitié 24 de la portée cylindrique extérieure de l'élément élastomère 12 comporte un méplat 60 complémentaire d'un méplat 62 formé dans la concavité 28 de l'élément usiné.

Similairement, la seconde moitié 26 de la portée cylindrique extérieure de l'élément élastomère 12 comporte un méplat 64 complémentaire d'un méplat 66 formé dans l'élément 22 d'aide au maintien en rotation, qui est lui-même complémentaire d'un méplat 68 correspondant formé dans la cale 40 de compression. Cette configuration permet d'interdire la rotation de l'élément 12 en matériau élastomère une fois que la cale 40 de compression ait été montée.

L'invention propose donc un ensemble de palier d'articulation d'une barre anti-dévers permettant un pré-montage sécurisé lors de l'assemblage du véhicule automobile sur lequel elle doit être montée.

## Revendications

1. Ensemble (10) de palier d'articulation d'une barre anti-dévers d'une suspension de véhicule automobile sur un élément de structure de caisse dudit véhicule automobile comprenant au moins un élément élastomère (12) sensiblement cylindrique tubulaire comportant un alésage interne (14) qui est traversé par la barre anti-dévers et qui est reçu dans un logement (16) en forme de U solidaire de l'élément de structure de caisse, une portée extérieure (22) dudit élément (12) élastomère comportant une première moitié (24) qui est reçue dans une portée de fond concave (28) du logement (16) en forme de U et une seconde moitié (26) qui reçoit une bride (42) d'immobilisation dans ledit logement (16),
**caractérisé en ce que** l'élément élastomère (12) est collé sur la barre anti-dévers et **en ce que** l'ensemble (10) comporte des moyens de montage autorisant une rotation limitée de la barre, qui comportent au moins :
- un élément (30) d'aide au maintien en rotation, comprenant une partie sensiblement semi-cylindrique (32), qui comporte une portée intérieure (34) qui est collée sur la seconde moitié (26) de la portée extérieure (22) de l'élément élastomère (12) et qui comporte une partie (36) en saillie, porté par une portée extérieure de la partie (32) semi-cylindrique, qui autorise un débattement angulaire déterminé limité de l'élément élastomère (12) entre des parois parallèles (38) du logement en "U" pendant la mise en place de la barre anti-dévers et de l'élément élastomère (12) dans le logement (16),
- une cale (40) de compression, qui est apte à être indexée suivant une position angulaire déterminée sur l'élément (30) d'aide au maintien en rotation et à être reçue simultanément sans jeu entre les parois parallèles (38) du logement en "U",
- une bride (42) d'immobilisation, apte à coiffer la cale (40) de compression et à la serrer dans le logement (16) en U contre l'élément élastomère (12) pour immobiliser l'élément élastomère (12) en rotation après la mise en place de la barre anti-dévers et de l'élément élastomère (12) dans le logement (16).

2. Ensemble (10) de palier selon la revendication précédente, **caractérisé en ce que** la cale (40) de compression comporte au moins un logement (44) complémentaire de la partie en saillie, qui est apte à recevoir ladite partie (36) en saillie pour permettre l'indexation angulaire de ladite cale (40) de compression sur l'élément d'aide (30) au maintien en rotation.

3. Ensemble (10) de palier selon la revendication précédente, **caractérisé en ce que** la partie (36) en saillie comporte un doigt qui fait saillie radialement à partir de la portée extérieure de l'élément (30) d'aide au maintien en rotation, et qui traverse un perçage (44) de la cale (40) de compression formant le logement complémentaire puis un perçage (46) de la bride (42).

4. Ensemble (10) de palier selon la revendication 2, **caractérisé en ce que** la partie (36) en saillie comporte une clavette (36) qui fait saillie radialement à partir de la portée extérieure de l'élément (30) d'aide au maintien en rotation transversalement par rapport à son axe (A), et qui est reçue dans un logement complémentaire de la cale (40) de compression.

5. Ensemble de palier (10) selon l'une des revendications 1 à 4, **caractérisé en ce que** le logement (16) en forme de U est formé dans un élément (18) de fonderie solidaire de l'élément de structure de caisse et **en ce qu'**il comporte une portée (28) de fond semi-cylindrique recevant la première moitié (24) de la portée cylindrique extérieure de l'élément élastomère, la bride d'immobilisation (42) étant constituée d'une plaque qui est fixée transversalement sur l'élément (18) de fonderie de manière à fermer le logement (16) en forme de U.

6. Ensemble (10) de palier selon l'une des revendications 1 à 4 **caractérisé en ce que** le logement (16) en forme de U est formé dans une face supérieure (46) d'un élément usiné (20) qui comporte une face inférieure d'appui (48) sur l'élément de structure de caisse, et **en ce qu'**il comporte une portée (28) de fond concave complémentaire de la première moitié (24) de la portée extérieure de l'élément élastomère (12), la bride d'immobilisation (42B) étant constituée d'un cavalier en forme de fer à cheval qui comprend un logement concave (50) et des bras parallèles (52) recevant la cale ( 40) de compression, lesdits bras comportant à leur extrémités des branches transversales (54) aptes à être fixées sur l'élément de structure de caisse.

7. Ensemble (10) de palier selon la revendication précédente, **caractérisé en ce que** les branches transversales (54) comportent des perçages (54) qui sont traversés par des vis (58) qui sont reçues dans l'élément de structure de caisse, pour permettre la fixation de la bride (42) sur l'élément de structure de caisse.

8. Ensemble (10) de palier selon l'une des revendications 6 ou 7, **caractérisé en ce que** l'élément usiné (20) présente un encombrement transversal correspondant à l'écartement des bras (52) de la bride (40), pour permettre la fixation de l'élément usiné (20) sur l'élément de structure de caisse par l'intermédiaire de la bride (40).

9. Ensemble (10) de palier selon l'une des revendications 5 à 8, **caractérisé en ce que** la première moitié (24) de la portée cylindrique extérieure de l'élément élastomère (12) comporte un méplat (60) complémentaire d'un méplat (62) formé dans la concavité (28) de l'élément usiné.

10. Ensemble (10) de palier selon l'une des revendications 5 à 8, **caractérisé en ce que** la seconde moitié (26) de la portée cylindrique extérieure de l'élément élastomère comporte un méplat (64) complémentaire d'un méplat (66) formé dans élément d'aide (30) au maintien en rotation et d'un méplat (68), correspondant formé dans la cale(40) de compression.

## Patentansprüche

1. Schwenklagereinheit (10) eines Querstabilisators einer Aufhängung eines Kraftfahrzeugs an einem Karosserie-Strukturelement des Kraftfahrzeugs, die mindestens ein rohrförmiges, im Wesentlichen zylindrisches Elastomerelement (12) enthält, das eine Innenbohrung (14) aufweist, die vom Querstabilisator durchquert wird, und das in einer U-förmigen Aufnahme (16) aufgenommen wird, die fest mit dem Karosserie-Strukturelement verbunden ist, wobei eine Außenauflagefläche (22) des Elastomerelements (12) eine erste Hälfte (24), die in einer konkaven Bodenauflagefläche (28) der U-förmigen Aufnahme (16) aufgenommen wird, und eine zweite Hälfte (26) aufweist, die einen Flansch (42) zur Fixierung in der Aufnahme (16) aufnimmt, **dadurch gekennzeichnet, dass** das Elastomerelement (12) auf den Querstabilisator geklebt wird, und dass die Einheit (10) eine begrenzte Drehung des Stabilisators erlaubende Montageeinrichtungen aufweist, die mindestens aufweisen:
- ein Drehhalt-Unterstützungselement (30), das einen im Wesentlichen halbzylindrischen Teil (32) enthält, der eine Innenauflagefläche (34) aufweist, die auf die zweite Hälfte (26) der Außenauflagefläche (22) des Elastomerelements (12) geklebt wird, und das einen vorstehenden Teil (36) aufweist, der von einer Außenauflagefläche des halbzylindrischen Teils (32) getragen wird, der einen begrenzten bestimmten Winkelausschlag des Elastomerelements (12) zwischen parallelen Wänden (38) der U-förmigen Aufnahme während des Einsetzens des Querstabilisators und des Elastomerelements (12) in die Aufnahme (16) erlaubt,
- einen Komprimierungskeil (40), der gemäß einer bestimmten Winkelstellung auf dem Drehhalt-Unterstützungselement (30) indexiert und gleichzeitig ohne Spiel zwischen den parallelen Wänden (38) der U-förmigen Aufnahme aufgenommen werden kann,
- einen Fixierungsflansch (42), der den Komprimierungskeil (40) überdecken und ihn in der U-förmigen Aufnahme (16) gegen das Elastomerelement (12) drücken kann, um das Elastomerelement (12) nach dem Einsetzen des Querstabilisators und des Elastomerelements (12) in die Aufnahme (16) in Drehung zu fixieren.

2. Lagereinheit (10) nach dem vorhergehenden Anspruch, **dadurch gekennzeichnet, dass** der Komprimierungskeil (40) mindestens eine zum vorstehenden Teil komplementäre Aufnahme (44) aufweist, die den vorstehenden Teil (36) aufnehmen kann, um die Winkelindexierung des Komprimierungskeils (40) auf dem Drehhalt-Unterstützungselement (30) zu ermöglichen.

3. Lagereinheit (10) nach dem vorhergehenden Anspruch, **dadurch gekennzeichnet, dass** der vorstehende Teil (36) einen Finger aufweist, der radial ausgehend von der Außenauflagefläche des Drehhalt-Unterstützungselements (30) vorsteht, und der eine die komplementäre Aufnahme bildende Bohrung (44) des Komprimierungskeils (40) und dann eine Bohrung (46) des Flanschs (42) durchquert.

4. Lagereinheit (10) nach Anspruch 2, **dadurch gekennzeichnet, dass** der vorstehende Teil (36) einen Spannkeil (36) aufweist, der radial ausgehend von der Außenauflagefläche des Drehhaltunterstützungselements (30) quer bezüglich seiner Achse (A) vorsteht, und der in einer komplementären Aufnahme des Komprimierungskeils (40) aufgenommen wird.

5. Lagereinheit (10) nach einem der Ansprüche 1 bis 4, **dadurch gekennzeichnet, dass** die U-förmige Aufnahme (16) in einem fest mit dem Karosserie-Strukturelement verbundenen Gusselement (18) ausgebildet ist, und dass sie eine halbzylindrische Bodenauflagefläche (28) aufweist, die die erste Hälfte (24) der äußeren zylindrischen Auflagefläche des Elastomerelements aufnimmt, wobei der Fixierungsflansch (42) aus einer Platte besteht, die quer am Gusselement (18) befestigt ist, um die U-förmige Aufnahme (16) zu verschließen.

6. Lagereinheit (10) nach einem der Ansprüche 1 bis 4, **dadurch gekennzeichnet, dass** die U-förmige Aufnahme (16) in einer Oberseite (46) eines maschinell bearbeiteten Elements (20) ausgebildet ist, das eine untere Auflageseite (48) auf dem Karosserie-Strukturelement aufweist, und dass sie eine konkave Bodenauflagefläche (28) aufweist, die zur ersten Hälfte (24) der Außenauflagefläche des Elastomerelements (12) komplementär ist, wobei der Fixierungsflansch (42B) aus einer hufeisenförmigen Krampe besteht, die eine konkave Aufnahme (50) und parallele Schenkel (52) enthält, die den Komprimierungskeil (40) aufnehmen, wobei die Schenkel an ihren Enden Querarme (54) aufweisen, die an dem Karosserie-Strukturelement befestigt werden können.

7. Lagereinheit (10) nach dem vorhergehenden Anspruch, **dadurch gekennzeichnet, dass** die Querarme (54) Bohrungen (54) aufweisen, die von Schrauben (58) durchquert werden, die im Karosserie-Strukturelement aufgenommen werden, um die Befestigung des Flanschs (42) am Karosserie-Strukturelement zu ermöglichen.

8. Lagereinheit (10) nach einem der Ansprüche 6 oder 7, **dadurch gekennzeichnet, dass** das maschinell bearbeitete Element (20) eine Querabmessung aufweist, die dem Spreizen der Schenkel (52) des Flanschs (40) entspricht, um die Befestigung des maschinell bearbeiteten Elements (20) am Karosserie-Strukturelement mit Hilfe des Flanschs (40) zu ermöglichen.

9. Lagereinheit (10) nach einem der Ansprüche 5 bis 8, **dadurch gekennzeichnet, dass** die erste Hälfte (24) der äußeren zylindrischen Auflagefläche des Elastomerelements (12) eine Abflachung (60) komplementär zu einer Abflachung (62) aufweist, die in der Konkavität (28) des maschinell bearbeiteten Elements ausgebildet ist.

10. Lagereinheit (10) nach einem der Ansprüche 5 bis 8, **dadurch gekennzeichnet, dass** die zweite Hälfte (26) der äußeren zylindrischen Auflagefläche des Elastomerelements eine Abflachung (64) komplementär zu einer Abflachung (66), die im Drehhaltunterstützungselement (30) ausgebildet ist, und zu einer entsprechenden Abflachung (68) aufweist, die im Komprimierungskeil (40) ausgebildet ist.

## Claims

1. Bearing assembly (10) for articulating an anti-roll bar of a motor vehicle suspension on a body structure element of the said motor vehicle, comprising at least one tubular substantially cylindrical elastomer element (12) comprising an internal bore (14) which is traversed by the anti-roll bar and which is received in a U-shaped housing (16) secured to the body structure element, an outer bearing portion (22) of the said elastomer element (12) comprising a first half (24) which is received in a concave bottom bearing portion (28) of the U-shaped housing (16) and a second half (26) which receives a flange (42) for immobilization in the said housing (16),
**characterized in that** the elastomer element (12) is adhesively bonded to the anti-roll bar and **in that** the assembly (10) comprises mounting means allowing a limited rotation of the bar, which means comprise at least:
- a rotation-maintaining assistance element (30) comprising a substantially semi-cylindrical part (32) which comprises an inner bearing portion (34) which is adhesively bonded to the second half (26) of the outer bearing portion (22) of the elastomer element (12) and which comprises a projecting part (36) which is borne by an outer bearing portion of the semi-cylindrical part (32) and which allows a limited defined angular deflection of the elastomer element (12) between parallel walls (38) of the "U"-shaped housing during the fitting of the anti-roll bar and the elastomer element (12) in the housing (16),
- a compression block (40) which is able to be indexed in a defined angular position on the rotation-maintaining assistance element (30) and to be received simultaneously without play between the parallel walls (38) of the "U"-shaped housing,
- an immobilization flange (42) which is able to cover the compression block (40) and to clamp it in the U-shaped housing (16) against the elastomer element (12) in order to immobilize the elastomer element (12) in terms of rotation after the anti-roll bar and the elastomer element (12) have been fitted in the housing (16).

2. Bearing assembly (10) according to the preceding claim, **characterized in that** the compression block (40) comprises at least one housing (44) which is complementary with the projecting part and which is able to receive the said projecting part (36) in order to allow the angular indexing of the said compression block (40) on the rotation-maintaining assistance element (30).

3. Bearing assembly (10) according to the preceding claim, **characterized in that** the projecting part (36) comprises a stud which projects radially from the outer bearing portion of the rotation-maintaining assistance element (30) and which traverses an aperture (44) in the compression block (40) forming the complementary housing and then an aperture (46) in the flange (42).

4. Bearing assembly (10) according to Claim 2, **characterized in that** the projecting part (36) comprises a key (36) which projects radially from the outer bearing portion of the rotation-maintaining assistance element (30) transversely with respect to its axis (A) and which is received in a complementary housing of the compression block (40).

5. Bearing assembly (10) according to one of Claims 1 to 4, **characterized in that** the U-shaped housing (16) is formed in a cast element (18) secured to the body structure element and **in that** it comprises a semi-cylindrical bottom bearing portion (28) receiving the first half (24) of the outer cylindrical bearing portion of the elastomer element, the immobilization flange (42) being constituted by a plate which is fixed transversely on the cast element (18) so as to close the U-shaped housing (16).

6. Bearing assembly (10) according to one of Claims 1 to 4, **characterized in that** the U-shaped housing (16) is formed in an upper face (46) of a machined element (20) which comprises a lower face (48) for bearing on the body structure element, and **in that** it comprises a concave bottom bearing portion (28) complementary with the first half (24) of the outer bearing portion of the elastomer element (12), the immobilization flange (42B) being constituted by a staple in the form of a horseshoe which comprises a concave housing (50) and parallel arms (52) receiving the compression block (40), the said arms comprising, at their ends, transverse branches (54) able to be fixed on the body structure element.

7. Bearing assembly (10) according to the preceding claim, **characterized in that** the transverse branches (54) comprise apertures (54) which are traversed by screws (58) which are received in the body structure element in order to allow the flange (42) to be fixed on the body structure element.

8. Bearing assembly (10) according to either of Claims 6 and 7, **characterized in that** the machined element (20) has a transverse overall size corresponding to the separation between the arms (52) of the flange (40) in order to allow the machined element (20) to be fixed on the body structure element by way of the flange (40).

9. Bearing assembly (10) according to one of Claims 5 to 8, **characterized in that** the first half (24) of the outer cylindrical bearing portion of the elastomer element (12) comprises a flat (60) complementary with a flat (62) formed in the concavity (28) of the machined element.

10. Bearing assembly (10) according to one of Claims 5 to 8, **characterized in that** the second half (26) of the outer cylindrical bearing portion of the elastomer element comprises a flat (64) complementary with a flat (66) formed in the rotation-maintaining assistance element (30) and with a corresponding flat (68) formed in the compression block (40).
